# EUROPEAN PATENT SPECIFICATION

(11) **EP 1 350 950 B1**
(45) Date of publication and mention of the grant of the patent: **01.06.2005**
(21) Application number: 03006715.1
(22) Date of filing: 24.03.2003
(51) Int. Cl.: F02P 5/15, F01N 3/20, F02D 41/06

(54) **Control apparatus for a powertrain, powertrain, control method thereof, computer-readable storage medium, and computer program**
Steuereinrichtung für einen Antriebsstrang, Antriebsstrang, Steuerverfahren, durch Rechner lesbares Speichermedium, und Computerprogramm
Dispositif de commande pour un groupe motopropulseur, groupe motopropulseur, procede de commande, support de mémoire lisible par ordinateur, et programme informatique

(30) Priority: 29.03.2002 JP 2002095696; 29.03.2002 JP 2002095690
(43) Date of publication of application: 08.10.2003
(73) Proprietor: Mazda Motor Corporation, Aki-gun, Hiroshima 730-8670 (JP)
(72) Inventor: Abe, Hirohide, Mazda Motor Corporation, Aki-gun, Hiroshima 730-8670 (JP); Takebayashi, Hiroyuki, Mazda Motor Corporation, Aki-gun, Hiroshima 730-8670 (JP)
(74) Representative: Müller-Boré & Partner Patentanwälte

(56) References cited:
- EP-A- 0 719 937
- EP-A- 0 896 149
- US-A- 5 492 094

## Description

The present invention relates to a control apparatus for a powertrain, to a powertrain, to a control method for a powertrain, to a computer readable storage medium storing thereon a computer program, and to a computer program for performing a control method, when run on a suitable computer.

Exhaust gas discharged from an automotive engine includes pollutants, such as NOx (or nitrogen oxides), CO (or carbon monoxide), and HC (or hydrocarbon). In order to purify these pollutants, the engine is generally equipped with a catalyst converter comprising an exhaust-gas purification catalyst like a three-way catalyst in its exhaust-gas passage. The exhaust-gas purification catalyst, however, provides insufficient purification of the exhaust-gas until reaching its activation temperature. To cope with this, in engine cold start, it is required that the temperature of the exhaust-gas purification catalyst be quickly raised (or the catalyst should be quickly warmed) to reduce the emission of the pollutants.

To achieve the purpose described above, a control apparatus for an engine has been proposed which, in engine cold start, significantly retards ignition timing from that in the normal operation to promote the temperature rise in the exhaust-gas purification catalyst, as disclosed in Japanese Unexamined Patent Publication No. H11-107838. The ignition retard reduces the conversion rate of heat caused by fuel combustion into mechanical energy, and the heat corresponding to the reduced conversion rate remains in the exhaust-gas, thereby increasing the exhaust-gas temperature.

In a conventional engine, however, ignition retard impairs combustion stability to increase the combustion fluctuation, deteriorating the stable operation of the engine (or causing the more amounts of vibration and shock). In addition, fuel is difficult to atomize in the idling state immediately after engine cold start, also deteriorating the combustion stability. That is, if ignition timing is significantly retarded from that in the normal operation for promoting the temperature rise in the exhaust-gas purification catalyst in engine cold start, the stability of the engine operation is significantly impaired.

EP 0 896 149 discloses a control apparatus of an engine having an exhaust-gas purifying catalyst. The control apparatus retards an ignition timing to accelerate the light-off of the exhaust gas purifying catalyst.

In view of the problem above, an object of the present invention is to provide an effective approach to promoting the light-off or the temperature rise in the exhaust-gas purification catalyst for enhancing the emission performance of the engine, while favourably maintaining the substantially stable engine operation, in engine cold start.

This object is fulfilled by a control apparatus having the features disclosed in claim 1, a powertrain having the features disclosed in claim 10, a control method having the features disclosed in claim 11, a computer-readable storage medium having the features disclosed in claim 14 and a computer program having the features disclosed in claim 15. Preferred embodiments are defined in the dependent subclaims.

Thus, according to the present invention, the light-off or the temperature rise in the exhaust-gas purification catalyst is promoted for enhancing the emission performance of the engine, while the stable engine operation is favourably maintained in engine cold start.

In accordance with the present invention, there is provided a control apparatus for a powertrain, the powertrain including an engine, an exhaust-gas purification catalyst capable of purifying exhaust gas discharged from the engine, and engine driving means for assisting the engine with torque, wherein the control apparatus is communicatively coupled to the engine and the engine driving means, and programmed so as to control an ignition timing of the engine to promote the light-off of the exhaust-gas purification catalyst, while controlling the engine driving means to maintain operational stability of the engine.

Accordingly, the exhaust-gas temperature is raised by retarding the ignition timing by a large amount or other controls, so as to promote the light-off of the exhaust-gas purification catalyst during the idling after cold start of the engine, for example. In this case, the engine driving means assist the engine with torque so as to favourably maintain the operational stability of the engine. Therefore, the light-off of the exhaust-gas purification catalyst is effectively promoted so as to effectively enhance the emission performance of the engine, while the engine favourably maintains the stable operation.

The control apparatus further includes torque assist control means; and ignition timing control means.
The torque assist control means is provided for controlling the engine driving means to assist the engine with torque in the idling operation during a predetermined period after engine start. The ignition timing control means is provided for performing an ignition timing control which retards a target ignition timing to the retard side of a large fluctuation range with the large fluctuation in combustion of the engine and controls an actual ignition timing to be the target ignition timing, in the idling operation during a predetermined or predeterminable period after engine start.

The inventors of the present invention have newly obtained knowledge significant for advantageously controlling an engine equipped with an engine driving means. According to the knowledge, in the engine equipped with an engine driving means, retarding the ignition to a region a certain period after the normal timing (e.g. MBT) causes the large combustion fluctuation, which impairs the operational stability of the engine (this region is referred to as "increased combustion fluctuation region"). On the retard side of the increased combustion fluctuation region, however, the absolute value of the combustion fluctuation reduces and the operational stability of the engine thus improves (this region is referred to as "the decreased combustion fluctuation region"). Further retarding the ignition timing beyond the decreased combustion fluctuation region tends to cause misfire.

Thus, in view of the knowledge, the control apparatus may preferably include ignition timing control means for performing an ignition timing control which retards a target ignition timing to the retard side of a large fluctuation range with the large fluctuation in combustion of the engine and controls an actual ignition timing to be the target ignition timing (or to the decreased combustion fluctuation region), in the idling operation during a predetermined or predeterminable period after engine start (or in the cold-idling state). More preferably, the control apparatus may include torque assist control means for controlling the engine driving means to assist the engine with torque in the idling operation during a predetermined period after engine start (or in the cold-idling state). Accordingly, during the cold-idling state, the exhaust-gas temperature is raised by the ignition retard while the engine maintains the favourable operational stability, so as to promote the light-off of the exhaust-gas purification catalyst. Therefore, the light-off of the exhaust-gas purification catalyst is effectively promoted so as to effectively enhance the emission performance of the engine, while favourably maintaining the stable operation of the engine.

Further preferably, the cold idling ignition timing preferably may be set on the advance side within the decreased combustion fluctuation region. This is because unnecessary or excessive ignition retard increases the change in ignition timing (or the amount of ignition advance), which may possibly cause an intense torque shock in the start of a vehicle equipped with the powertrain.

In accordance with a preferred embodiment of the present invention, the ignition timing control means set the target ignition timing to be more retarded for the larger charging efficiency of the engine. According to the knowledge which the inventors of the present invention have been newly obtained, in an engine equipped with an engine driving means, the boundary between the increased combustion fluctuation region and the decreased combustion fluctuation region shifts towards the retard side as the charging efficiency of the engine is increased. Accordingly, in the cold-idling state, it is required that the cold idling ignition timing be more retarded for the larger charging efficiency of the engine.

This keeps the change in ignition timing to a minimum while averting the region where the combustion fluctuation of the engine increases.

In the case that temperature detecting means is provided for detecting temperature of the exhaust-gas purification catalyst, or temperature equivalent to (or associated with) it (referred to as "catalyst temperature"), the ignition timing control means may preferably perform the ignition timing control only when the temperature detecting means detect a temperature equal to or lower than a predetermined or predeterminable temperature (referred to as "reference temperature") of the exhaust-gas purification catalyst. This avoids unnecessary ignition retard.

In accordance with a preferred embodiment of the present invention, the ignition timing control means quickly and discontinuously change the target ignition timing so that the target ignition timing jumps to the advance side of the large fluctuation range (or to a region with the favourable operational stability of the engine on the advance side of the increased combustion fluctuation region), and control the actual ignition timing to be the target ignition timing, when the engine shifts to the non-idling state while performing the ignition timing control.

If the cold-idling ignition-timing control is performed only at a catalyst temperature equal to or lower than the reference temperature, the ignition timing control means may quickly and discontinuously change the target ignition timing so that the target ignition timing jumps to the advance side of the large fluctuation range (or increased combustion fluctuation region), and control the actual ignition timing to be the target ignition timing, when the temperature detecting means detects a temperature higher than the reference temperature (predetermined or predeterminable temperature) of the exhaust-gas purification catalyst.

In any case, the ignition timing advances across the large fluctuation range (or increased combustion fluctuation region), so that the ignition timing is prevented from remaining in the region with large combustion fluctuation and poor operational stability of the engine.

More preferably, the ignition timing control means may set the target ignition timing to be closer to MBT at which the engine delivers maximum torque for the larger charging efficiency of the engine. In other words, the timing to which the ignition timing jumps may be set so that the timing difference between the timing after the jump and MBT is smaller for the larger charging efficiency ce of the engine. Generally, MBT shifts towards the retard side as the charging efficiency ce increases. Thus, when the ignition timing is controlled to jump to a fixed timing regardless of the charging efficiency ce for example, the timing difference between the timing after the jump and MBT consequently becomes smaller as the charging efficiency ce increases. Accordingly, the change in ignition timing is kept to a minimum while avoiding the region where the combustion fluctuation of the engine increases.

Further preferably, the ignition timing control means may quickly and discontinuously change the target ignition timing firstly so that the target ignition timing jumps to the retard side of MBT, and then gradually approximate the target ignition timing to MBT, when changing the target ignition timing to the advance side. This prevents the abrupt change in ignition timing, which reduces a torque shock.

Still further preferably, the torque assist control means may control the engine driving means to reduce the amount of assist torque substantially synchronously with the jumping of the target ignition timing. In particular, the torque assist control means may control the amount of the assist torque so as to complement the change in output torque of the engine with the jump of the ignition timing to the advance side. This prevents a torque shock because the decreased torque due to the reduced assist torque compensates for the increased torque due to the ignition advance when the engine shifts from the idling operation to the non-idling operation..

According to the present invention, there is further provided a powertrain including, an engine, an exhaust-gas purification catalyst capable of purifying exhaust gas discharged from the engine, engine driving means for assisting the engine with torque, and a control apparatus according to the present invention or the preferred embodiment thereof.

According to the present invention, there is still further provided a control method for a powertrain, the powertrain including an engine, an exhaust-gas purification catalyst capable of purifying exhaust gas discharged from the engine, and engine driving means for assisting the engine with torque, the control method comprising the following steps: judging if the engine is in the idling operation during a predetermined period after engine start, and setting a target ignition timing on the retard side of a large fluctuation range with the large fluctuation in combustion of the engine if the engine is judged to be in the idling operation during a predetermined or predeterminable period after engine start, and controlling an actual ignition timing to be the target ignition timing, while controlling the engine driving means to assist the engine with torque.

In accordance with the preferred embodiment of the present invention, the control method further comprises the following steps: judging if the engine has shifted from the idling operation to a non-idling operation, quickly and discontinuously changing the target ignition timing so that the target ignition timing jumps to the advance side of the large fluctuation range if the engine is judged to have shifted to the non-idling operation, and/or controlling the actual ignition timing to be the target ignition timing.

In accordance with the preferred embodiment of the present invention, the control method still further comprises the following step: controlling the engine driving means to reduce the amount of assist torque synchronously with the jumping of the ignition timing.

According to the present invention, there is still further provided a computer-readable storage medium having stored thereon a computer program, which, when loaded onto a computer, carries out a control method according to the present invention or the preferred embodiment thereof.

According to the present invention, there is still further provided a computer program, . which, when loaded onto a computer, carries out a control method according to the present invention or the preferred embodiment thereof.

Other features, aspects, and advantages of the present invention will become apparent from the following description of the invention which refer to the accompanying drawings. It should be understood that even though embodiments are separately described, single features thereof may be combined to additional embodiments.
FIG. 1 is a schematic diagram showing an engine which is a part of the powertrain in accordance with the present invention;
FIGS. 2 (a) and (b) show the constitutions of ISG which assists the engine shown in FIG. 1 with torque;
FIG. 3 is a graph chart showing the change in the combustion fluctuation and others with respect to the ignition timing and charging efficiency when the ISG assists the engine with torque;
FIG. 4 is a flow chart showing the control routine of the cold idling control;
FIGS. 5 (a) to (c) are graph charts showing control states when the cold-state retard is terminated;
FIG. 6 is graph charts showing the changes with time in a variety of parameters when the engine shifts from the idling operation to the non-idling operation and thus shifts from the cold-state retard to the normal operation;
FIG. 7 is graph charts showing other changes with time in a variety of parameters when the engine shifts from the idling operation to the non-idling operation and thus shifts from the cold-state retard to the normal operation;
FIG. 8 is graph charts showing the changes with time in a variety of parameters when the engine shifts from the cold-state retard to the normal operation after the catalyst converter reaches the reference temperature; and
FIG. 9 is graph charts showing the changes in emission performance, the amount of heat of the exhaust gas, engine torque, and combustion fluctuation with respect to the ignition timing.

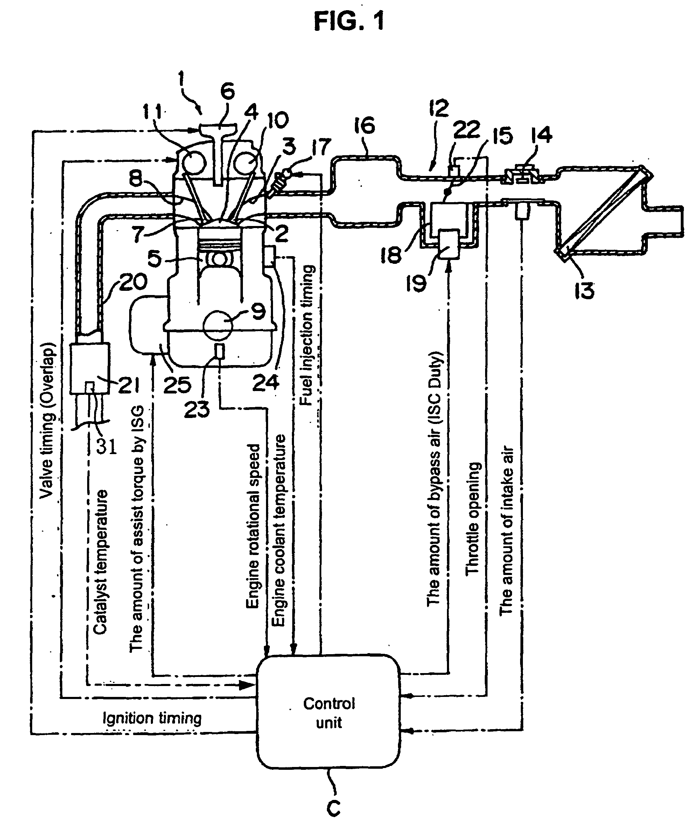

A preferred embodiment of the present invention will now be described. FIG. 1 shows an engine which incorporates the present invention. As shown in FIG. 1, the engine 1, a part of a powertrain, introduces mixture into a combustion chamber 4 through an intake port 3 while an intake valve 2 is open. The mixture is compressed by a piston 5 in the combustion chamber 4, and ignited by a spark plug (not shown) driven by an ignition coil 6 at a predetermined timing to combust. The combusted or exhausted gas is discharged into an exhaust port 8 while an exhaust valve 7 is open. The ignition coil 6 can advance and/or retard the ignition timing in an adjustable or controllable manner within a predetermined or predeterminable range.

With the abovementioned process being repeated, the piston 5 reciprocates. The reciprocating motion of the piston 5 is converted into rotational motion of a crank shaft 9 through a connecting rod (not shown), which provides the output torque to be delivered from the engine 1. The opening and closing timing of the intake valve 2 is adjusted by an intake-side variable valve timing mechanism 10. The opening and closing timing of the exhaust valve 7 is adjusted by an exhaust-side variable valve timing mechanism 11. Alternatively, a conventional valve system may be used in place of the intake-side and exhaust-side variable valve timing mechanisms.

The intake port 3 is supplied with air for combusting fuel through an intake-air passage 12. In the intake-air passage 12, from the upstream side to the downstream with respect to airflow, an air filter 13 for removing dust from the air, an airflow sensor 14 for detecting the amount or flow of the intake air, a throttle valve 15 operative to open and close preferably in response to the operation of an acceleration pedal (not shown), a surge tank 16 for evening out the airflow, and an injector 17 for injecting fuel (e.g. gasoline) into air in the intake-air passage 12 and/or the intake port 3 to form mixture, are provided. The intake-air passage 12 is also provided with an ISC (idle speed control) passage 18 (or bypass air passage) which bypasses the throttle valve 15. In the ISC passage 18, an ISC valve 19 is provided. During idling of the engine, air is supplied through the ISC passage 18. By controlling the opening of the ISC valve 19, the rotational speed is adjusted during idling. The engine 1 may be of a so-called direct-injection type.

On the other hand, exhaust gas is discharged from the exhaust port 8 to the outside (or into the atmosphere) through the exhaust-gas passage 20. In the exhaust-gas passage 20, a catalyst converter 21 is provided which comprises an exhaust-gas purification catalyst capable of purifying the exhaust-gas. The exhaust-gas purification catalyst may be a preferably three-way catalyst capable of purifying pollutants such as NOx, HC and/or CO. This exhaust-gas purification catalyst provides sufficient purification at a temperature equal to or higher than its activation temperature (e.g. 360 to 400°C), and provides insufficient purification at a temperature lower than the activation temperature.

The powertrain is provided with a control unit C including a computer. The control unit C is an overall control apparatus for the engine 1, an integrated starter generator (referred to as ISG) 25, and other units as described later, and performs variety of controls in accordance with a variety of control signals. Particularly, the control unit C receives a variety of control signals indicative of: the amount of the intake-air detected by the airflow sensor 14; the opening of the throttle detected by a throttle sensor 22; a crank angle detected by a crank-angle sensor 23; and/or an engine coolant temperature detected by a coolant temperature sensor 24; and the like. In accordance with the control signal(s), the control unit C performs the controls of: the amount fuel injection and injection timing under which the injector 17 operates; the ignition timing via the control of ignition coil 6 (or spark plug); the amount of the bypass air via the control of opening and closing the ISC valve 19, the amount of the assist torque via the control of the ISG 25, the timing of the valve operation via the control of the variable valve timing mechanisms 10, 11, or the like.

That is, the control unit C is communicatively coupled to the sensors 14, 22, 23 and/or 24, and also communicatively coupled to the coil 6, valve 19, ISG 25, and mechanisms 10,11. The communication may be achieved by use of electrical connection, wireless connection, optical communication, or other connections that allow signal or information exchange there through.

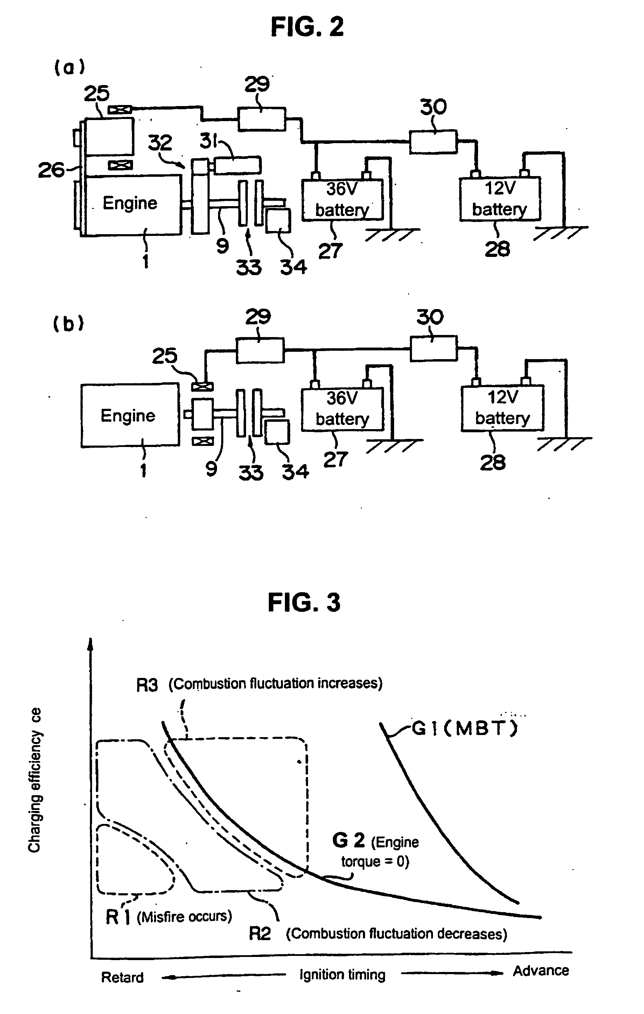

As shown in FIG. 2 (a), the powertrain includes the ISG 25 which assists the engine 1 with torque. The ISG 25 is a motor/generator integrating a starter and an alternator, and is driven by the crank shaft 9 via a belt 26. The ISG 25 is electrically coupled to a 36V battery 27, a 12V battery 28, an inverter 29, and a DC/DC converter 30. For the engine 1, a conventional starter 31 is also provided, which is coupled to the crank shaft 9 via a gearing system 32. Torque is transmitted from the crank shaft to a hydraulic automatic transmission (not shown) via a torque converter 33 (otherwise a clutch). The automatic transmission is accompanied by an oil pump 34. As shown in FIG. 2(b), the ISG 25 may be directly coupled to the crank shaft 9, without the belt 26.

As described above, the control unit C performs a variety of controls of the powertrain. The following description is made for only the ignition timing control and the assist torque control for promoting the light-off and the temperature rise in the exhaust-gas purification catalyst 21 while maintaining the stable operation of the engine 1 during idling in a cold state, or during the cold-idling state (referred to as cold start idling control). The other controls by the control unit C are not described, because they are well-known conventional controls. The term "cold start" used in this specification refers to when the engine 1 starts in an unheated state at normal temperature, including a cold state.

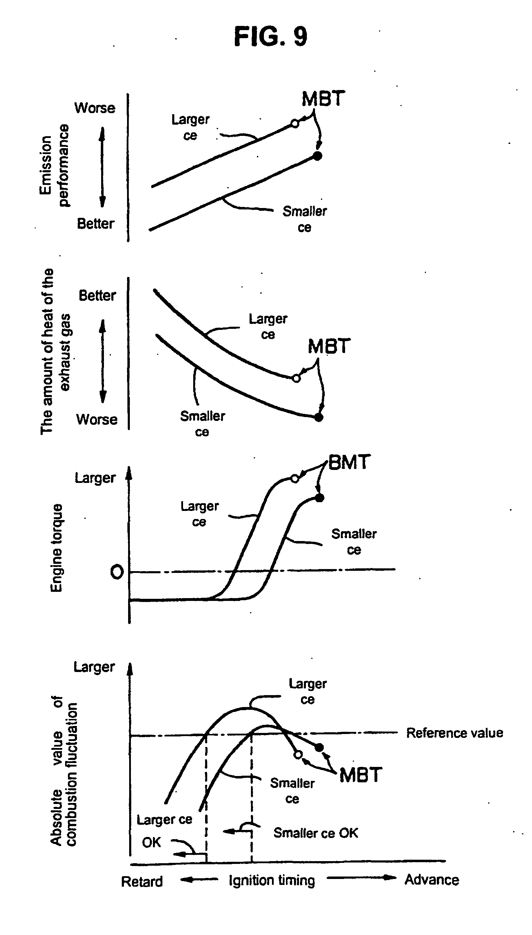

Firstly, the cold start idling control will be outlined. FIG. 9 shows the variations in emission performance, the amount of heat in the exhaust gas, engine torque; and combustion fluctuation with respect to the ignition timing. As apparent from FIG. 9, the emission performance increases as the ignition is retarded and as the charging efficiency ce is reduced. The amount of heat or the temperature of the exhaust gas increases as the ignition is retarded and as the charging efficiency ce is increased. The output torque of the engine (or engine torque) increases as the ignition is advanced and as the charging efficiency ce is increased. The (magnitude of) combustion fluctuation is maximized (or becomes worst) at a certain ignition timing, or is reduced on both the retard side and the advance side of the ignition timing. The ignition timing for the maximum combustion fluctuation shifts to the retard side as the charging efficiency ce is increased.

That is, when the ignition is retarded to a timing that causes the negative engine torque, the amount of heat of the exhaust gas is increased, the emission performance is improved, and the combustion fluctuation is reduced. As the ignition is retarded, however, the temperature of the mixture at ignition drops under the influence of a piston position. Thus, the ignition of the mixture becomes difficult and thus misfire becomes likely to occur. In other words, a misfire region arises where the ignition is retarded by a considerable amount. This misfire limit shifts towards the retard side as the charging efficiency ce is increased.

FIG. 3 summarizes the relationships above, showing the changes in combustion fluctuation and others with respect to the ignition timing and charging efficiency while the ISG 25 is assisting the engine 1 with torque. As shown in FIG. 3, the increased combustion fluctuation region R3 arises on the retard side of MBT (indicated as G1 in the graph chart) which provides the maximum torque in the engine 1 assisted with torque by the ISG 25. In the region R3, the fluctuation in combustion increases and the engine 1 thus unstably operates. On the other hand, the decreased combustion fluctuation region R2 arises on the retard side of the increased combustion fluctuation region R3. In the region R2, the fluctuation in combustion reduces and the engine 1 thus stably operates. Further, the misfire region R1 arises on the retard side of the decreased combustion fluctuation region R2. In the region R1, the engine 1 tends to misfire. On the line G2 in the FIG. 3, the engine 1 delivers no torque.

Therefore, during cold idling, the cold start idling control assists the engine 1 with torque using the ISG 25, and sets ignition timing in a predetermined timing (referred to as cold idling ignition timing) within the region R2 with the smaller amount of the engine combustion fluctuation, not within the region R3 with the larger amount of the engine combustion fluctuation. In this case, the cold idling ignition timing is advanced within the region R2. This is because unnecessary ignition retard may increase the change in ignition timing (or the amount of ignition advance) to cause an intense torque shock during the starting of the vehicle equipped with this powertrain. In addition, excessive ignition retard may possibly cause the ignition timing to enter the misfire region R1.

As apparent from FIG. 3, the boundary between the region R3 and the region R2 shifts towards the retard side for the larger charging efficiency ce. Thus, it is required that the cold idling ignition timing be more retarded as the charging efficiency ce increases.

The cold start idling control performed by the control unit C as described above favourably maintains the combustion stability of the engine 1 while raising the exhaust-gas temperature with the ignition retard during cold idling of the engine 1. This promotes the light-off of the exhaust-gas purification catalyst 21. That is, the light-off of the exhaust-gas purification catalyst 21 is effectively promoted while the engine 1 maintains the favorable operational stability, so that the emission performance of the engine 1 is effectively enhanced.

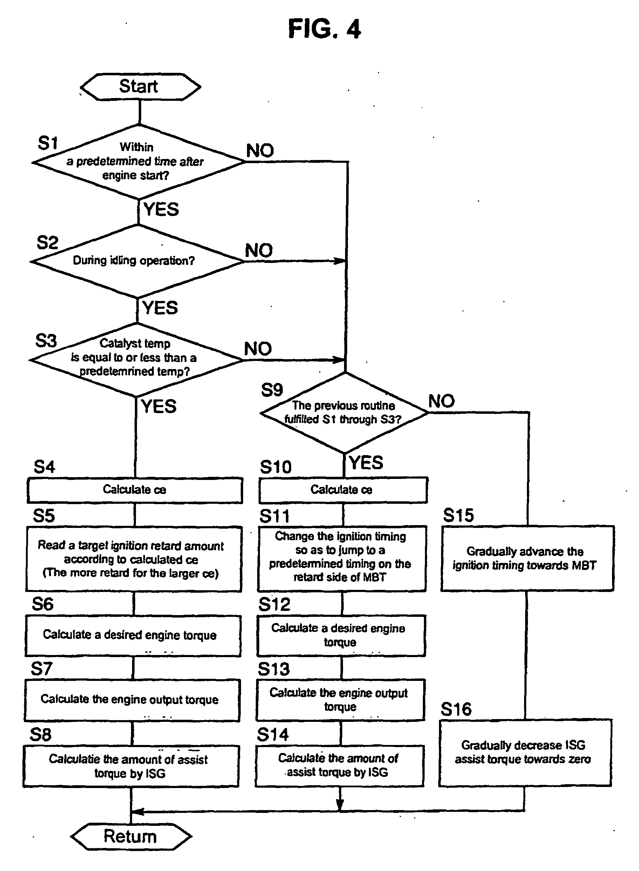

The detailed description will now be made for the cold start idling control performed by the control unit C with reference to the flow chart shown in FIG. 4. As shown in FIG. 4, at steps S1 through S3, the cold start idling control judges if the elapsed time from engine start is shorter than a predetermined time period, the engine 1 is idling, and the temperature of the catalyst converter 21 is equal to or lower than a reference temperature (or a predetermined or predeterminable temperature), respectively. The predetermined time period used at step S1 is a certain value approximately within 30 to 90 seconds. The reference temperature (or the predetermined temperature) used at step S3 is a certain value approximately within 360 to 400 °C, which has been determined according to the properties of the exhaust-gas purification catalyst 21.

If the elapsed time from engine start is shorter than a predetermined time period, the engine 1 is idling, and the catalyst temperature is equal to or lower then the predetermined temperature (that is, all of steps S1 through S3 judge YES), then the ignition is retarded to the cold idling ignition timing within the region R2 (referred to as "cold-state retard") and the engine 1 is assisted with torque at steps S4 through S8.

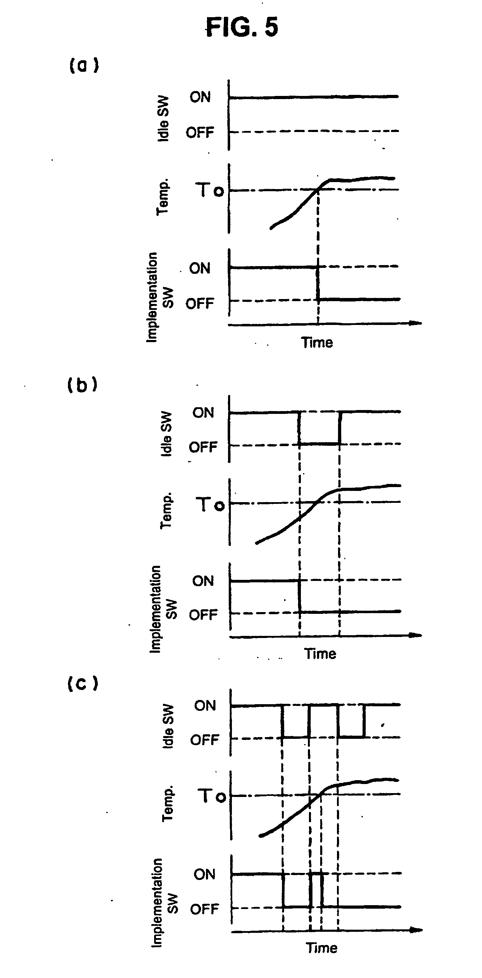

FIGS. 5 (a) to (c) concretely show the changes in control states with respect to the idling condition and the catalyst temperature within a certain time period after engine start. The concrete example in FIG. 5 (a) shows that the cold-state retard is terminated (or an implementation switch is turned off) when the catalyst temperature reaches the reference temperature T0. The concrete example in FIG. 5 (b) shows that the cold-state retard is terminated when the engine 1 shifts from the idling state to the non-idling state (or when an idle switch is tuned off). Even if the engine 1 returns to the idling state thereafter, the cold-state retard is not performed because the catalyst temperature has already exceeded the reference temperature T0. The concrete example in FIG. 5 (c) shows that the cold-state retard is again performed when the engine 1 returns to the idling state after shifting from the idling state to the non-idling state. This is because the catalyst temperature does not reach the reference temperature T0 when the engine 1 returns to the idling state. Then, the cold-state retard is terminated when the catalyst temperature reaches the reference temperature T0.

Particularly, the charging efficiency ce is calculated at step S4. Then, at step S5, a target ignition timing (or the amount of ignition retard) is read or determined or searched from a prescribed map or table or relationship based on the charging efficiency ce. This map provides the more retarded ignition timing (or the more amount of ignition retard) for the larger charging efficiency ce. Thus, the ignition coil 6 is controlled so as to achieve the target ignition timing described above. At step S5, the ignition timing is more retarded for the larger charging efficiency ce. This is because the charging efficiency ce and ignition timing (or the amount of ignition retard) can be set within wide ranges because of the torque assist by the ISG 25 for the engine 1.

Next, at step S6, a desired torque for maintaining the idling rotational speed of the engine 1 is calculated or determined. Then, at step S7, an output torque from the engine 1 is calculated. Thereafter, at step S8, the amount of assist torque to be delivered by the ISG 25 is calculated. The amount of the assist torque is determined by subtracting the output torque from the desired torque of the engine 1. The amount of the assist torque determined as above is attained by controlling an output of the ISG 25 through the adjustment of the current supplied thereto. Then, the routine returns to step S1.

If the elapsed time from engine start is not shorter than a predetermined time period, the engine 1 is not idling, or the temperature of the catalyst converter 21 is not equal to nor lower than a reference temperature (or a predetermined or predeterminable temperature) at steps S1 through S3 (that is, at least one of steps S1 through S3 judges NO), then, at step S9, the judgement is made whether the previous routine of this control has fulfilled all the conditions at steps S1 through S3, that is, whether all of steps S1 through S3 have judged YES in the previous routine.

If the step S9 judges that all the conditions have been fulfilled at steps S1 through S3 in the previous routine, this means that step S9 is firstly reached after the routine exited from the loop repeated from step S1 through S8 for the first time. In this case, a series of steps S10 through S14 is performed once so that the ignition timing is quickly changed in a discontinuous manner so as to jump to a predetermined timing on the retard side of MBT. This timing is set in the region preferable in operational stability of the engine 1 on the advance side of the R3.

Particularly, at step S10, the charging efficiency ce is calculated. Then, at step S11, the ignition timing is changed so as to jump to the predetermined timing on the retard side of MBT. This causes the ignition timing to advance across the region R3. Thus, the ignition timing is prevented from remaining in the region R3.

The timing to which the ignition timing jumps is set to a fixed timing (or the amount of retard) regardless of the charging efficiency ce. Thus, the ignition timing after the jump approaches the MBT as the charging efficiency ce increases. This keeps the change in ignition timing to a minimum while avoiding the region where the combustion fluctuation of the engine 1 is increased.

Next, at step S12, a desired torque for maintaining the idling rotational speed is calculated or determined. Then, an output torque from the engine 1 is calculated or determined. Thereafter, at step S14, the amount of assist torque to be delivered by the ISG 25 is calculated or determined. The amount of the assist torque determined as above is attained by controlling an output of the ISG 25. Then, the routine returns to step S1.

If step S9 judges that not all the conditions have been fulfilled at steps S1 through S3 in the previous routine or a series of steps S10 through S14 has been performed once, the ignition timing is gradually approximated to MBT at steps S15 and S16. Particularly, at step S15, the ignition timing is gradually advanced towards MBT. Then, at step S16, the amount of assist torque to be delivered by the ISG 25 is gradually reduced towards zero.

As described above, when jumping to a period on the advance side, the ignition timing is firstly retarded to the period on the retard side of MBT, and then gradually approximated to MBT, without abrupt change in ignition timing or a torque shock. Additionally, the amount of the assist torque delivered by the ISG 25 is reduced simultaneously with the ignition advance, so that the decreased torque due to the reduced assist torque compensates for the increased torque due to the ignition advance, which effectively prevent the occurrence of a torque shock. Then, the routine returns to step S1.

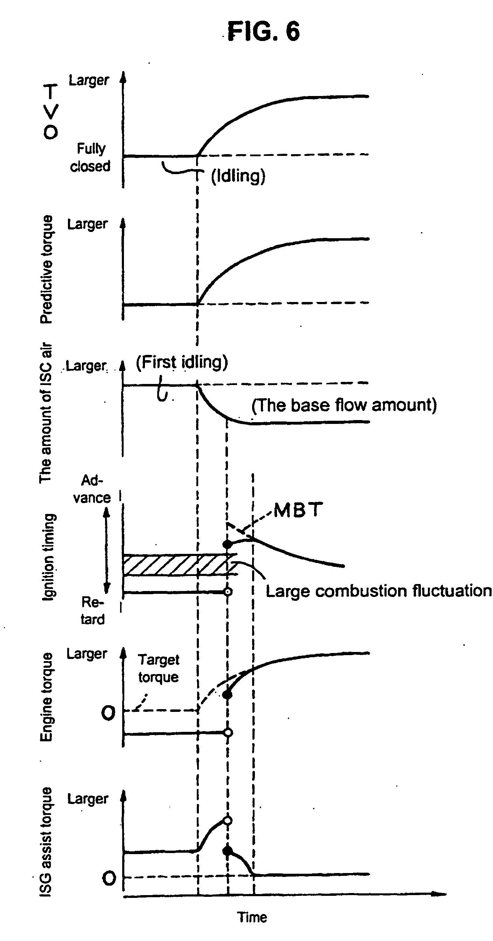

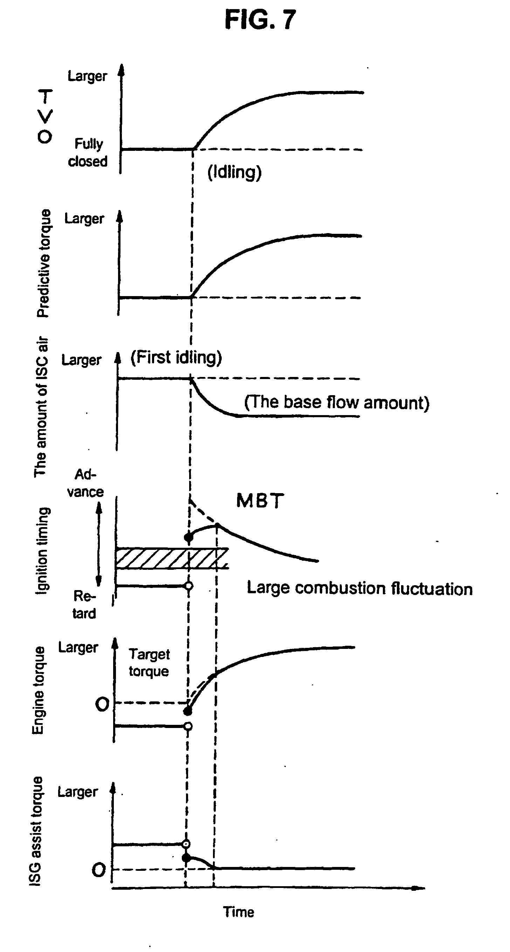

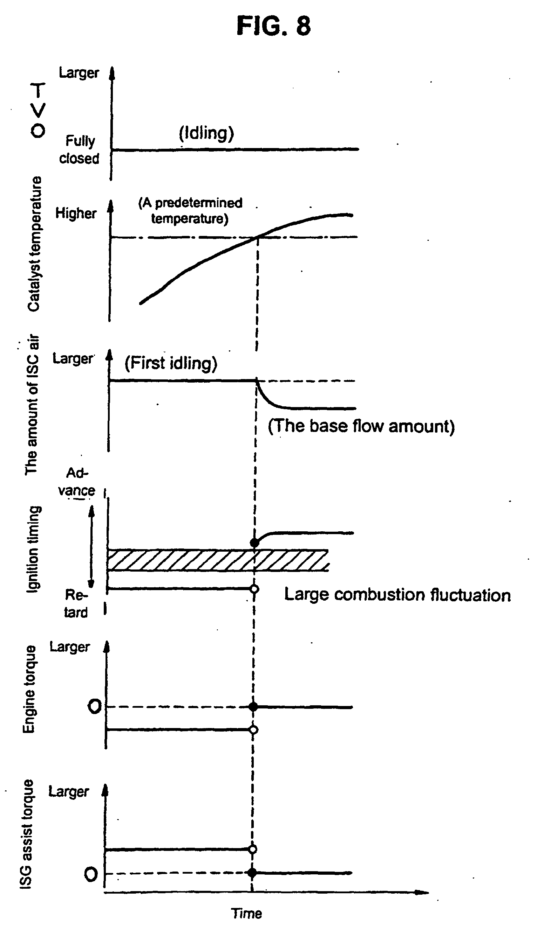

FIG. 6 to FIG. 8 concretely show the changes with time in the throttle valve opening TVO, the amount of predictive torque, the amount of bypass air (or ISC air), the ignition timing, the amount of the engine torque, and the amount of assist torque delivered by the ISG 25, when the engine 1 returns to the normal operation from the cold-state retard in three ways, respectively. FIG. 6 shows the changes in the above in the case that the cold-state retard is terminated and the ignition timing is changed so as to jump, after the amount of bypass air stabilizes, when the engine 1 shifts from the idling operation to non-idling operation. FIG. 7 shows the changes in the above in the case that the cold-state retard is terminated and the ignition timing is changed so as to jump, immediately after the engine 1 shifts from the idling operation to non-idling operation. FIG. 8 shows that the changes in the above in the case that the cold-state retard is terminated and the ignition timing is changed so as to jump, after the catalyst converter reaches the reference temperature (or the predetermined temperature).

As described above, this cold start idling control raises the exhaust-gas temperature using ignition retard while maintaining the favourable operational stability of the engine 1, so as to promote the light-off of the exhaust-gas purification catalyst during the cold-idling state. Accordingly, the light-off of the exhaust-gas purification catalyst 21 is effectively promoted so as to effectively enhance the emission performance of the engine 1, while the engine 1 favourably maintains the stable operation.

Accordingly, a powertrain comprises: an engine 1 equipped with a catalyst converter 21 (or an exhaust-gas purification catalyst 21) capable of purifying exhaust gas; and an ISG 25 which assists the engine 1 with torque. The powertrain is controlled by a control unit C. The control unit C retards ignition timing of the engine 1 to the decreased combustion fluctuation region R2, so as to promote the light-off of the exhaust-gas purification catalyst 21, during idling within a predetermined period after cold start. At the same time, the control unit C controls the ISG 25 to assist the engine 1 with torque, so as to maintain the operational stability of the engine 1. When the engine 1 shifts to the non-idling state, the ignition timing is changed so as to jump across the increased combustion fluctuation region R3 to a timing (G1) near MBT.

## Claims

1. A control apparatus (C) for a powertrain, the powertrain including an engine (1) and, an exhaust-gas purification catalyst (21) capable of purifying exhaust gas discharged from the engine (1),
wherein said control apparatus (C) is to be communicatively coupled to the engine (1) and the engine driving means (25), and programmed so as to control an ignition timing of the engine (1) to promote the light-off of the exhaust-gas purification catalyst (21),
wherein said control apparatus (C) includes:
ignition timing control means for performing an ignition timing control which retards a target ignition timing to the retard side and controls an actual ignition timing to be the target ignition timing in an idling operation during a predeterminable period after engine start;
**characterized by**
engine driving means (25) assisting the engine (1) with torque which is communicatively coupled with said control apparatus (C), and
torque assist control means for controlling the auxiliary engine driving means (25) to assist the engine (1) with torque in the idling operation during a predetermined period after engine start to maintain operational stability of the engine (1), wherein
said ignition timing control means retards the target ignition timing to the retard side of a large fluctuation range (R3) with the large fluctuation in combustion of the engine (1) in the idling operation during a predetertninable period after engine start.

2. The control apparatus (C) for a powertrain as defined in claim 1, wherein said ignition timing control means set the target ignition timing to be more retarded for the larger charging efficiency of the engine (1).

3. The control apparatus (C) for a powertrain as defined in any one of the preceding claims, further including temperature detecting means (31) for detecting temperature of the exhaust-gas purification catalyst (21) or equivalent thereto, the temperature detecting means (31) being communicatively coupled to said ignition timing control means,
wherein said ignition timing control means perform the ignition timing control only when the temperature detecting means (31) detect a temperature equal to or lower than a predeterminable temperature of the exhaust-gas purification catalyst (21).

4. The control apparatus (C) for a powertrain as defined in any one of the preceding claims, wherein said ignition timing control means quickly and discontinuously change the target ignition timing so that the target ignition timing jumps to the advance side of the large fluctuation range (R3), and control the actual ignition timing to be the target ignition timing, when the engine (1) shifts to the non-idling state while performing the ignition timing control.

5. The control apparatus (C) for a powertrain as defined in claim 4, wherein said ignition timing control means quickly and discontinuously change the target ignition timing so that the target ignition timing jumps to the advance side of the large fluctuation range (R3), and control the actual ignition timing to be the target ignition timing, when the temperature detecting means (31) detects a temperature higher than the predeterminable temperature of the exhaust-gas purification catalyst (21).

6. The control apparatus (C) for a powertrain as defined in claim 5, wherein said ignition timing control means set the target ignition timing to be closer to MBT at which the engine (1) delivers maximum torque for the larger charging efficiency of the engine (1).

7. The control apparatus (C) for a powertrain as defined in any one of claims 5 and 6, wherein said ignition timing control means quickly and discontinuously change the target ignition timing firstly so that the target ignition timing jumps to the retard side of MBT, and then gradually approximate the target ignition timing to MBT, when changing the target ignition timing to the advance side.

8. The control apparatus (C) for a powertrain as defined in any one of claims 5 to 7, wherein said torque assist control means control the engine driving means (25) to reduce the amount of assist torque synchronously with the jumping of the target ignition timing.

9. The control apparatus for a powertrain as defined in claim 8, wherein said torque assist control means control the amount of the assist torque so as to complement the change in output torque of the engine (1) with the jump of the ignition timing to the advance side.

10. A powertrain including,
an engine (1),
an exhaust-gas purification catalyst (21) capable of purifying exhaust gas discharged from the engine (1),
engine driving means (25) assisting the engine with torque, and
a control apparatus (C) as defined in any one of the preceding claims.

11. A control method for a powertrain, the powertrain including an engine (1), and an exhaust-gas purification catalyst (21) capable of purifying exhaust gas discharged from the engine (1), the control method comprising the following steps:
judging if the engine (1) is in the idling operation during a predetermined period after engine start, and
setting a target ignition timing on the retard side, if the engine (1) is judged to be in the idling operation during the predeterminable period after engine start, and
controlling an actual ignition timing to be the target ignition timing,
**characterized by**:
controlling an engine driving means (25) to assist the engine (1) with torque if the engine (1) is judged to be in the idling operation during the predetermined period after engine start, and
setting the target ignition timing on the retard side of a large fluctuation range (R3) with the large fluctuation in combustion of the engine (1) if the engine (1) is judged to be in the idling operation during the a predeterminable period after engine start.

12. The control method for a powertrain as defined in claim 11, further comprising the following steps:
judging if the engine (1) has shifted from the idling operation to a non-idling operation,
quickly and discontinuously changing the target ignition timing so that the target ignition timing jumps to the advance side of the large fluctuation range (R3) if the engine (1) is judged to have shifted to the non-idling operation, and/or
controlling the actual ignition timing to be the target ignition timing.

13. The control method for a powertrain as defined in claim 11 or 12, further comprising the following step:
controlling the engine driving means (25) to reduce the amount of assist torque synchronously with the jumping of the ignition timing.

14. Computer-readable storage medium having stored thereon a computer program, which, when loaded onto a computer, carries out a control method for a powertrain as defined in any one of claims 11 to 13.

15. Computer program, which, when loaded onto a computer, carries out a control method for a powertrain as defined in any one of claims 11 to 13.

## Patentansprüche

1. Steuereinrichtung (C) für einen Antriebsstrang, wobei der Antriebsstrang einen Motor (1) und einen Abgasreinigungs-Katalysator (21) beinhaltet, welcher zu einem Reinigen von Abgas fähig ist, welches von dem Motor (1) abgegeben ist,
wobei die Steuereinrichtung (C) verbindend bzw. in Verbindung mit dem Motor (1) zu koppeln ist und programmiert ist, um einen Zündzeitpunkt des Motors (1) zu regeln bzw. zu steuern, um das Anspringen des Abgasreinigungs-Katalysators (21) auszulösen bzw. zu unterstützen,
wobei die Steuereinrichtung (C) beinhaltet:
Zündzeitpunkt-Regel- bzw. -Steuermittel zum Durchführen einer Zündzeitpunktsteuerung, welche ein Ziel-Zündzeitpunkt zu der Verzögerungsseite verzögert bzw. verschiebt und einen tatsächlichen Zündzeitpunkt regelt bzw. steuert, um dem Ziel-Zündzeitpunkt in einem Leerlaufbetrieb während einer vorbestimmbaren Periode nach einem Motorstart zu sein;
**gekennzeichnet durch**
Motorantriebsmittel (25), welche den Motor (1) mit einem Drehmoment unterstützen, welches verbindend mit der Steuereinrichtung (C) gekoppelt ist, und
Drehmomentunterstützungs-Regel- bzw. -Steuermittel zum Regeln bzw. Steuern der hilfsweisen bzw. Hilfsmotor-Antriebsmittel (25), um den Motor (1) mit Drehmoment in dem Leerlaufbetrieb während einer vorbestimmten Periode nach einem Motorstart zu unterstützen, um eine Betriebsstabilität des Motors (1) aufrechtzuerhalten, wobei:
die Zündzeitpunkt-Steuermittel den Ziel-Zündzeitpunkt zu der Verzögerungsseite eines großen Fluktuationsbereichs (R3) mit der großen Fluktuation in einer Verbrennung des Motors (1) in dem Leerlaufbetrieb während einer vorbestimmten Periode nach einem Motorstart verzögern.

2. Steuereinrichtung (C) für einen Antriebsstrang nach Anspruch 1, wobei die Zündzeitpunkt-Steuermittel den Ziel-Zündzeitpunkt einstellen, um weiter für die größere Ladeeffizienz des Motors (1) verzögert zu sein.

3. Steuereinrichtung (C) für einen Antriebsstrang nach einem der vorangehenden Ansprüche, weiters beinhaltend Temperatur-Detektionsmittel (31) zum Detektieren einer Temperatur des Abgasreinigungs-Katalysators (21) oder eines Äquivalents davon, wobei die Temperatur-Detektionsmittel (31) verbindend mit den Zündzeitpunkt-Steuermitteln gekoppelt sind,
wobei die Zündzeitpunkt-Steuermittel die Zündzeitpunkt-Steuerung nur dann durchführen, wenn die Temperatur-Detektionsmittel (31) eine Temperatur gleich wie oder niedriger als eine vorbestimmbare Temperatur des Abgasreinigungs-Katalysators (21) detektieren.

4. Steuereinrichtung (C) für einen Antriebsstrang nach einem der vorangehenden Ansprüche, wobei die Zündzeitpunkt-Steuermittel rasch und diskontinuierlich den Ziel-Zündzeitpunkt derart ändern, daß der Ziel-Zündzeitpunkt zu der voreilenden Seite des großen Fluktuationsbereichs bzw. Bereichs (R3) einer großen Fluktuation springt, und den tatsächlichen Zündzeitpunkt regeln bzw. steuern, um der Ziel-Zündzeitpunkt zu sein, wenn der Motor (1) zu dem Nicht-Leerlaufzustand übergeht, während die Zündzeitpunkt-Steuerung bzw. -Regelung durchgeführt wird.

5. Steuereinrichtung (C) für einen Antriebsstrang nach Anspruch 4, wobei die Zündzeitpunkt-Steuermittel rasch und diskontinuierlich den Ziel-Zündzeitpunkt derart ändern, daß der Ziel-Zündzeitpunkt zu der voreilenden Seite des Bereichs (R3) einer großen Fluktuation springt, um den tatsächlichen Zündzeitpunkt regeln bzw. zu steuern, um der Ziel-Zündzeitpunkt zu sein, wenn die Temperatur-Detektionsmittel (31) eine Temperatur höher als die vorbestimmbare Temperatur des Abgasreinigungs-Katalysators (21) detektieren.

6. Steuereinrichtung (C) für einen Antriebsstrang nach Anspruch 5, wobei die Zündzeitpunkt-Steuermittel den Ziel-Zündzeitpunkt einstellen bzw. festlegen, um näher zu MBT zu sein, bei welchem der Motor (1) ein maximales Drehmoment für die größere Ladeeffizienz des Motors (1) liefert.

7. Steuereinrichtung (C) für einen Antriebsstrang nach einem der Ansprüche 5 und 6, wobei die Zündzeitpunkt-Steuermittel rasch und diskontinuierlich den Ziel-Zündzeitpunkt zuerst so ändern, daß der Ziel-Zündzeitpunkt zu der Verzögerungsseite von MBT springt, und dann zunehmend bzw. stufenweise den Ziel-Zündzeitpunkt dem MBT annähern, wenn sich der Ziel-Zündzeitpunkt zu der voreilenden Seite ändert.

8. Steuereinrichtung (C) für einen Antriebsstrang nach einem der Ansprüche 5 bis 7, wobei die Drehmomentunterstützungs-Regel- bzw. -Steuermittel die Motorantriebsmittel (25) regeln bzw. zu steuern, um das Ausmaß des Unterstützungs-Drehmoments synchron mit dem Springen des Ziel-Zündzeitpunkts zu reduzieren.

9. Steuereinrichtung für einen Antriebsstrang nach Anspruch 8, wobei die Drehmomentunterstützungs-Steuermittel das Ausmaß des Unterstützungs-Drehmoments regeln bzw. zu steuern, um die Änderung in einem ausgegebenen bzw. Ausgabedrehmoment des Motors (1) mit dem Sprung des Zündzeitpunkts zu der voreilenden Seite zu komplementieren bzw. auszugleichen.

10. Antriebsstrang, beinhaltend
einen Motor (1),
einen Abgasreinigungs-Katalysator (21), welcher zum Reinigen von Abgas fähig ist, welches von dem Motor (1) ausgebracht wird,
Motorantriebsmittel (25), welche den Motor mit Drehmoment unterstützen, und
eine Steuereinrichtung (C), wie sie in einem der vorangehenden Ansprüche definiert ist.

11. Steuerverfahren für einen Antriebsstrang, wobei der Antriebsstrang einen Motor (1) und einen Abgasreinigungs-Katalysator (21) beinhaltet, welcher zum Reinigen von Abgas fähig ist, welches von dem Motor (1) ausgebracht wird, wobei das Steuerverfahren die folgenden Schritte umfaßt:
Beurteilen, ob sich der Motor (1) in dem Leerlaufbetrieb während einer vorbestimmten Periode nach einem Motorstart befindet,
Einstellen eines Ziel-Einspritzzeitpunkts auf der verzögerten bzw. Verzögerungsseite, wenn für den Motor (1) beurteilt wird, daß er sich in dem Leerlaufzustand während der vorbestimmbaren Periode nach einem Motorstart befindet, und
Regeln bzw. Steuern eines tatsächlichen Zündzeitpunkt, um der Ziel-Zündzeitpunkt zu sein,
**gekennzeichnet durch**:
ein Regeln bzw. Steuern von Motorantriebsmitteln (25), um den Motor (1) mit Drehmoment zu unterstützen, wenn für den Motor (1) beurteilt wird, daß er sich in dem Leerlaufbetrieb während der vorbestimmten Periode nach einem Motorstart befindet, und
Einstellen des Ziel-Zündzeitpunkts auf der verzögernden bzw. Verzögerungsseite eines Bereichs (R3) großer Fluktuation mit der großen Fluktuation in einer Verbrennung des Motors (1), wenn für den Motor (1) beurteilt wird, daß er sich in dem Leerlaufbetrieb während der vorbestimmbaren Periode nach einem Motorstart befindet.

12. Steuerverfahren für einen Antriebsstrang nach Anspruch 11, weiters umfassend die folgenden Schritte:
Beurteilen, ob der Motor (1) von dem Leerlaufbetrieb zu einem Nicht-Leerlaufbetrieb gewechselt hat,
rasches und diskontinuierliches Ändern des Ziel-Einspritzzeitpunkts, so daß der Ziel-Einspritzzeitpunkt zu der voreilenden Seite des Bereichs (R3) großer Fluktuation springt, wenn für den Motor (1) beurteilt wird, daß er zu dem Nicht-Leerlaufbetrieb gewechselt hat, und/oder
Steuern des tatsächlichen Einspritzzeitpunkts, um der Ziel-Einspritzzeitpunkt zu sein.

13. Steuerverfahren für einen Antriebsstrang nach Anspruch 11 oder 12, weiters umfassend den folgenden Schritt:
Steuern der Motorantriebsmittel (25), um das Ausmaß eines unterstützenden bzw. Unterstützungs-Drehmoments synchron mit dem Springen des Einspritzzeitpunkts zu reduzieren.

14. Computer-lesbares Speichermedium, welches darauf ein Computerprogramm gespeichert hat, welches, wenn auf einen Computer geladen, ein Steuerverfahren für einen Antriebsstrang durchführt, wie es in einem der Ansprüche 11 bis 13 definiert ist.

15. Computerprogramm, welches, wenn auf einen Computer geladen, ein Steuerverfahren für einen Antriebsstrang durchführt, wie es in einem der Ansprüche 11 bis 13 definiert ist.

## Revendications

1. Dispositif de commande (C) destiné à un groupe motopropulseur, le groupe motopropulseur comprenant un moteur (1) et un catalyseur (21) de purification des gaz d'échappement capable de purifier les gaz d'échappement déchargés par le moteur (1),
ledit dispositif de commande (C) étant couplé au moteur (1) de manière à communiquer avec lui et étant programmé pour commander l'instant d'allumage du moteur (1) de manière à entraîner l'allumage du catalyseur (21) de purification des gaz d'échappement,
ledit dispositif de commande (C) comprenant :
un moyen de commande de l'instant d'allumage qui exécute la commande de l'instant d'allumage qui retarde l'instant cible d'allumage vers le côté en retard et qui commande l'instant effectif d'allumage pour qu'il soit l'instant cible d'allumage en fonctionnement au ralenti pendant une durée prédéterminable qui suit le démarrage du moteur,
**caractérisé par** :
un moyen (25) d'entraînement du moteur qui assiste par un couple le moteur (1) qui est couplé audit dispositif de commande (C) de manière à communiquer avec lui et par
un moyen de commande du couple d'assistance pour commander le moyen auxiliaire (25) d'entraînement du moteur pour assister le moteur (1) par un couple en fonctionnement au ralenti pendant une durée prédéterminée qui suit le démarrage du moteur, pour conserver la stabilité de fonctionnement du moteur (1),
ledit moyen de commande de l'instant d'allumage retardant l'instant cible d'allumage vers le côté en retard sur une large plage de fluctuation (R3) lorsque la fluctuation de la combustion du moteur (1) en fonctionnement au ralenti est grande pendant une durée prédéterminable qui suit le démarrage du moteur.

2. Dispositif de commande (C) destiné à un groupe motopropulseur selon la revendication 1, dans lequel ledit moyen de commande de l'instant d'allumage règle l'instant cible d'allumage pour qu'il soit plus retardé, pour augmenter le taux de remplissage du moteur (1 ).

3. Dispositif de commande (C) destiné à un groupe motopropulseur selon l'une quelconque des revendications précédentes, qui comprend en outre un moyen (31) de détection de la température pour détecter la température du catalyseur (21) de purification des gaz d'échappement ou de son équivalent, le moyen (31) de détection de la température étant couplé audit moyen de commande de l'instant d'allumage de manière à communiquer avec lui,
ledit moyen de commande de l'instant d'allumage n'exécutant la commande de l'instant d'allumage que lorsque le moyen (31 ) de détection de la température détecte que la température du catalyseur (21) de purification des gaz d'échappement est égale ou inférieure à une température prédéterminable.

4. Dispositif de commande (C) destiné à un groupe motopropulseur selon l'une quelconque des revendications précédentes, dans lequel ledit moyen de commande de l'instant d'allumage modifie rapidement et de manière discontinue l'instant cible d'allumage de telle sorte que l'instant cible d'allumage saute vers le côté en avance de la grande plage de fluctuation (R3) et commande l'instant effectif d'allumage pour qu'il soit l'instant cible d'allumage lorsque le moteur (1 ) passe dans l'état de non ralenti lors de l'exécution de la commande de l'instant d'allumage.

5. Dispositif de commande (C) destiné à un groupe motopropulseur selon la revendication 4, dans lequel ledit moyen de commande de l'instant d'allumage modifie rapidement et de manière discontinue l'instant cible d'allumage de telle sorte que l'instant cible d'allumage saute vers le côté en avance de la grande plage de fluctuation (R3) et commande l'instant effectif d'allumage pour qu'il soit l'instant cible d'allumage lorsque le moyen (31 ) de détection de la température détecte que la température du catalyseur (21) de purification des gaz d'échappement est supérieure à la température prédéterminable.

6. Dispositif de commande (C) destiné à un groupe motopropulseur selon la revendication 5, dans lequel ledit moyen de commande de l'instant d'allumage règle l'instant cible d'allumage pour qu'il soit plus proche du MBT auquel le moteur (1) délivre un couple maximal avec le plus grand taux de chargement du moteur (1).

7. Dispositif de commande (C) destiné à un groupe motopropulseur selon l'une quelconque des revendications 5 et 6, dans lequel ledit moyen de commande de l'instant d'allumage modifie d'abord rapidement et de manière discontinue l'instant cible d'allumage de telle sorte que l'instant cible d'allumage saute vers le côté en retard du MBT et rapproche ensuite progressivement l'instant cible d'allumage du MBT lorsqu'il modifie l'instant cible d'allumage vers le côté en avance.

8. Dispositif de commande (C) destiné à un groupe motopropulseur selon l'une quelconque des revendications 5 à 7, dans lequel ledit moyen de commande du couple d'assistance commande le moyen (25) d'entraînement du moteur pour réduire la valeur du couple d'assistance de manière synchronisée avec le saut de l'instant cible d'allumage.

9. Dispositif de commande destiné à un groupe motopropulseur selon la revendication 8, dans lequel ledit moyen de commande du couple d'assistance commande la valeur du couple d'assistance pour compenser la modification du couple de sortie du moteur (1) lors du saut de l'instant d'allumage vers le côté en avance.

10. Groupe motopropulseur qui comprend :
un moteur (1),
un catalyseur (21) de purification des gaz d'échappement capable de purifier les gaz d'échappement déchargés par le moteur (1),
un moyen (25) d'entraînement du moteur qui assiste le moteur par un couple et
un dispositif de commande (C) selon l'une quelconque des revendications précédentes.

11. Procédé de commande pour un groupe motopropulseur, le groupe motopropulseur comprenant un moteur (1) et un catalyseur (21) de purification des gaz d'échappement capable de purifier les gaz d'échappement déchargés par le moteur (1), le procédé de commande comprenant les étapes qui consistent à :
juger si le moteur (1) fonctionne au ralenti pendant une durée prédéterminée qui suit le démarrage du moteur,
régler l'instant cible d'allumage sur le côté en retard si le moteur (1 ) est jugé fonctionner au ralenti pendant la durée prédéterminable qui suit le démarrage du moteur et
commander l'instant effectif d'allumage pour qu'il soit l'instant cible d'allumage,
**caractérisé par** les étapes qui consistent à :
commander le moyen (25) d'entraînement du moteur pour qu'il assiste le moteur (1) par un couple si le moteur (1) est jugé fonctionner au ralenti pendant la durée prédéterminée qui suit le démarrage du moteur et
régler l'instant cible d'allumage sur le côté en retard d'une grande plage de fluctuation (R3) lorsque la fluctuation de la combustion du moteur (1) est grande si le moteur (1) est jugé fonctionner au ralenti pendant la durée prédéterminable qui suit le démarrage du moteur.

12. Procédé de commande destiné à un groupe motopropulseur selon la revendication 11, qui comprend en outre les étapes ci-dessous, qui consistent à :
juger si le moteur (1) est passé du fonctionnement au ralenti au fonctionnement de non ralenti,
modifier rapidement et de manière discontinue l'instant cible d'allumage de telle sorte que l'instant cible d'allumage saute vers le côté en avance de la grande plage de fluctuation (R3) lorsque le moteur (1) est jugé être passé en fonctionnement de non ralenti et/ou
commander l'instant effectif d'allumage pour qu'il soit l'instant cible d'allumage.

13. Procédé de commande destiné à un groupe motopropulseur selon les revendications 11 ou 12, qui comprend en outre l'étape ci-dessous, qui consiste à :
commander le moyen (25) d'entraînement du moteur de manière à réduire la valeur du couple d'assistance de manière synchronisée avec le saut de l'instant d'allumage.

14. Support de mémoire lisible par ordinateur, qui conserve un programme informatique qui, lorsqu'il est chargé sur un ordinateur, met en oeuvre un procédé de commande destiné à un groupe motopropulseur selon l'une quelconque des revendications 11 à 13.

15. Programme informatique qui, lorsqu'il est chargé sur un ordinateur, met en oeuvre un procédé de commande destiné à un groupe motopropulseur selon l'une quelconque des revendications 11 à 13.
